# EUROPEAN PATENT APPLICATION

(11) **EP 3 220 534 A1**
(43) Date of publication of application: **20.09.2017**
(21) Application number: 15859035.6
(22) Date of filing: 10.04.2015
(51) Int. Cl.: H02P 1/26

(54) **METHOD FOR SMOOTHLY STARTING HALL-LESS MOTOR**

(30) Priority: 10.11.2014 CN 201410628888
(71) Applicant: Changzhou Globe Co., Ltd., Jiangsu 213023 (CN)
(72) Inventor: WANG, Dehong, Changzhou Jiangsu 213023 (CN); LIU, Yi, Changzhou Jiangsu 213023 (CN); LI, Biao, Changzhou Jiangsu 213023 (CN)
(74) Representative: Becker Kurig Straus
(86) International application number: PCT/CN2015/076223
(87) International publication number: WO 2016/074425

(57) **Abstract**

A method of smoothly starting a Hall-less motor includes the steps of applying voltage to two items of a three-phase motor, determining positioning duty and positioning time so that duty cycle progressively increases from zero to prevent jitter during positioning, using fixed duty cycle so that dragging duty cycle equals to positioning duty cycle, setting initial phase-changing time and phase-changing time when dragging is ended, changing phase after timer is interrupted, generating logic signal by three-phase signal generated by three-phase motor, and transmitting to central processor simultaneously using external interruption method. The method adopts low cost hardware circuit structure, optimizes starting algorithm, and simplifies product design. Algorithm optimization is carried out in every step, and it has the advantages of smooth starting process, short starting time, and almost zero starting failure rate.

## Description

### FIELD OF THE TECHNOLOGY

The present application relates to a method of starting a motor, and more particularly to a method of smoothly starting a Hall-less motor.

### BACKGROUND

The traditional three-step starting method can normally start a Hall-less motor. However, the starting parameters must be re-adjusted when the motor parameters are different, the motor power supply voltages are different, or the sizes of the motor's starting load are different. Once the parameters do not match, the starting failure rate will be substantially increased. After adjustment, it must also go through a full starting test to determine whether the parameters are reasonable.

### SUMMARY

The technical problem that the present method mainly solves is to provide a method of smoothly starting a Hall-less motor that adopts a low cost hardware circuit structure, optimizes the starting algorithm, and simplifies the product design. Algorithm optimization is carried out in every section of the three starting steps. It has the advantages of smooth starting process, short starting time, almost zero starting failure rate, and so on.

Brushless Hall-less motors have been used more and more because of the advantages of lack of position sensor, simple assembly, and long service life. However, due to the fact that the traditional three-step starting method has high starting failure rate, and is difficult in adjusting the starting parameters, many people give up this method and use hardware and software design of higher cost circuit structure, and more powerful processes. The present method can still adopt low-cost hardware circuit structure, optimize the starting algorithm, and simplify the product design.

In order to solve the above-mentioned problem, an aspect is to provide a method of smoothly starting a Hall-less motor, including the following steps:
rotor positioning steps of: applying voltage to two items of a three-phase motor, determining a positioning duty and a positioning time so that a duty cycle progressively increases from zero upwards, thereby preventing jitter during positioning;
open-loop dragging steps of: using a fixed duty cycle so that a dragging duty cycle equals to a positioning duty cycle, setting an initial phase-changing time and a phase-changing time when dragging is ended, and changing a phase after a timer is interrupted; and
closed-loop switching steps of: generating a logic signal by a three-phase signal generated by the three-phase motor, and transmitting to a central processing unit simultaneously using an external interruption method, generating a zero-cross signal by the three-phase signal using a binary signal method, determining whether to cut into a closed loop by comparing whether the order of a value of the zero-cross signal is consistent with a set order, switching on and activating the motor if the orders are successively consistent for a number of times.

In a preferred embodiment, in the rotor positioning steps, the applied voltage adopts a PWM modulating signal.

In a preferred embodiment, in the closed-loop switching steps, the number of times of the comparing step is 2-3 times.

The present method can adopt low-cost hardware circuit structure, optimize the starting algorithm, and simplify the product design. Algorithm optimization is carried out in every section of the three starting steps. It has the advantages of smooth starting process, short starting time, almost zero starting failure rate, and so on.

### BRIEF DESCRIPTION OF THE DRAWINGS

In order to more clearly illustrate the technical solution provided by the embodiments of the method of smoothly starting a Hall-less motor of the present application, the drawings to be used in the description of the embodiments will be briefly described below. It will be apparent that the drawings mentioned in the following description are merely some implementation of the method of smoothly starting a Hall-less motor. Without making any creative effort, a person skilled in the art may derive other drawings from the drawings in the present application. wherein:
Figure 1 is a schematic diagram of the control principle of the method of smoothly starting a Hall-less motor according to a preferred embodiment of the present application;
Figure 2 is a diagram of the hardware structure of the method of smoothly starting a Hall-less motor according to a preferred embodiment of the present application; and
Figure 3 is a logic diagram of the method of smoothly starting a Hall-less motor according to a preferred embodiment of the present application.

### DETAILED DESCRIPTION

The technical solution provided by the embodiments of the method of smoothly starting a Hall-less motor of the present application will be described clearly and completely below. It is apparent that the described embodiments are only some embodiments of the method of smoothly starting a Hall-less motor, and are not intended to be exhaustive. All other embodiments obtained by an ordinary technical person skilled in the art, without making any creative effort, are within the scope of protection of the method of smoothly starting a Hall-less motor of the present application.

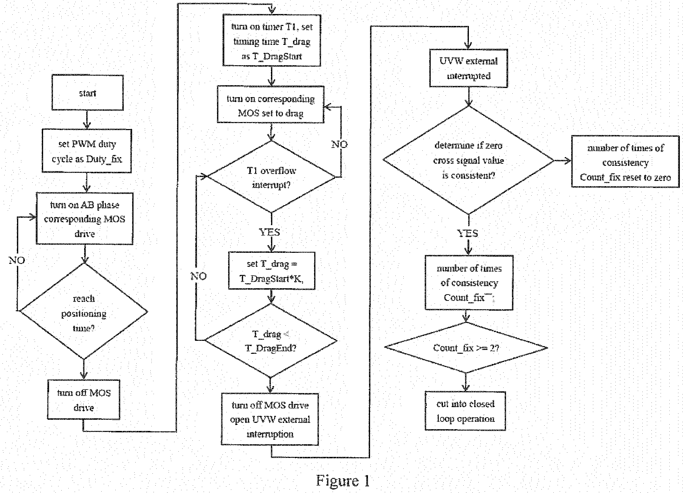

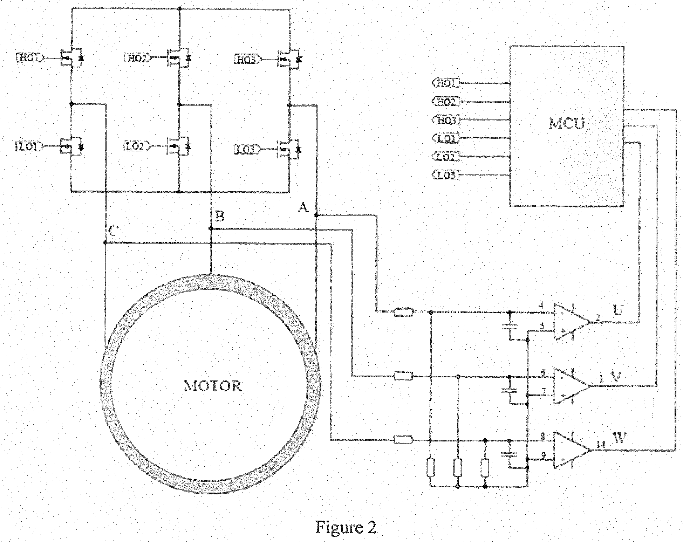

Referring to Figures 1 to 3, an embodiment of the method of smoothly starting a Hall-less motor may include the following steps:
rotor positioning steps of: applying voltage to two items of a three-phase motor, determining a positioning duty and a positioning time so that a duty cycle progressively increases from zero upwards, thereby preventing jitter during positioning;
open-loop dragging steps of: using a fixed duty cycle so that a dragging duty cycle equals to a positioning duty cycle, setting an initial phase-changing time and a phase-changing time when dragging is ended, and changing a phase after a timer is interrupted; and
closed-loop switching steps of: generating a logic signal by a three-phase signal generated by the three-phase motor, and transmitting to a central processing unit simultaneously using an external interruption method, generating a zero-cross signal by the three-phase signal using a binary signal method, determining whether to cut into a closed loop by comparing whether the order of a value of the zero-cross signal is consistent with a set order, switching on and activating the motor if the orders are successively consistent for a number of times.

Preferably, in the rotor positioning steps, the applied voltage adopts a PWM modulating signal.

Preferably, in the closed-loop switching steps, the number of times of the comparing step is 2-3 times.

Using a three-way comparator and a single-chip microcomputer, the circuit structure is simple. The motor three-phase ABC can access the comparator and output UVW signals. The comparator UVW signal output can be connected to a single-chip microcomputer. The single-chip microcomputer can receive the phase-change information through three-way signal coding, and then drive a group of six MOS.

An embodiment of the specific operation steps may include the following operation steps and method. The starting method can be mainly divided into three steps, namely rotor positioning, open-loop dragging, and closed-loop switching.

### A. Rotor positioning:

When positioning the rotor, a voltage may be applied to any two items of the three items of the motor. The applied voltage may adopt a PWM modulating signal. In order to prevent jitter during positioning, the duty cycle increases linearly from 0% after application of PWM, and the applied voltage is turned off after a certain time T.

This step has two parameters that need to be determined, namely, a PWM positioning duty Duty_fix, and a positioning time T_fix. In order to determine the compatibility of the parameters for different motors, the positioning time can be appropriately increased while ensuring that the current is normal. Since the PWM duty cycle slowly increases from 0%, jitter will not occur to the motor's rotor during positioning, but it will be slowly pulled to a fixed position.

### B. Open-loop dragging:

A fixed duty cycle is used during open-loop dragging. In order to achieve a smooth start, a drag duty cycle Duty_drag is set to be equal to the duty cycle Duty_fix during positioning. Then, a start phase-changing time T_DragStart and a phase-changing time at the end of dragging T_DragEnd are set. That is, the time of dragging for the first time is T_DragStart. A timer starts timing the T_DragStart. Then, a phase is changed after the timer is interrupted. The phase change is set one time, as shown in the figures. The next phase-changing time is the previous phase-changing time multiplies by coefficient K, and K <1. To ensure compatibility with the motor, the set time T_DragStart should be long enough. The basis to determine whether the time is long enough is whether the motor can move after the first phase change. Also, the setting of T_DragStart should be small enough. The basis for determination is that, after dragging, the counter electromotive force of the motor is high enough to allow the comparator to output normal logic high/low level. Once the open-loop dragging time is less than T_DragEnd, one can exit the open-loop dragging, turn off all driving voltages of the MOS, and enter the closed-loop switching section.

### C. Closed-loop switching:

The result of the open-loop dragging is that the motor is already rotating. Enough counter electromotive force occurs in the three-phase motor. The three signals UVW will generate a logic signal and transmit to MCU using an external interruption method. Combining the logic table shown in the figure, the UVW signals get a value in binary form.

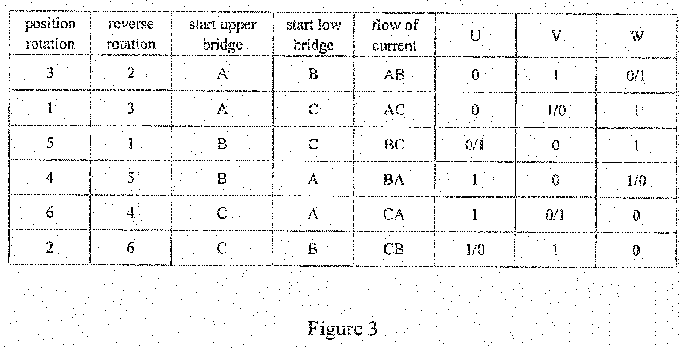

For example, according to the level of UVW on the MCU pins, U = 0, V = 1, W = 1, then the value of UVW is 0*4+1*2+1 = 3. This value is called a zero-cross signal. One can determine whether to cut into the closed loop by comparing whether the order of a value of the zero-cross signal is consistent with the order in the two left columns shown in Figure 3. If the orders are successively consistent for 2-3 times, then turn on the MOS to activate the motor, and the starting of the motor is completed.

The advantageous effects of the method of smoothly starting a Hall-less motor are as follows:
(1) it adopts a low cost hardware circuit structure, optimizes the starting algorithm, and simplifies the product design; and
(2) algorithm optimization is carried out in every section of the three starting steps, and it has the advantages of smooth starting process, short starting time, almost zero starting failure rate, and so on.

The above-mentioned embodiments are merely some embodiments of the method of smoothly starting a Hall-less motor of the present application, and the scope of patent protection is not limited to these embodiments. Any equivalent structures or equivalent changes of process using the contents of the present patent specification, or any direct/indirect applications in other related field of technology are within the scope of patent protection of the present application.

## Claims

1. A method of smoothly starting a Hall-less motor, comprising,
rotor positioning steps of: applying voltage to two items of a three-phase motor, determining a positioning duty and a positioning time so that a duty cycle progressively increases from zero upwards, thereby preventing jitter during positioning;
open-loop dragging steps of: using a fixed duty cycle so that a dragging duty cycle equals to a positioning duty cycle, setting an initial phase-changing time and a phase-changing time when dragging is ended, and changing a phase after a timer is interrupted; and
closed-loop switching steps of: generating a logic signal by a three-phase signal generated by the three-phase motor, and transmitting to a central processing unit simultaneously using an external interruption method, generating a zero-cross signal by the three-phase signal using a binary signal method, determining whether to cut into a closed loop by comparing whether the order of a value of the zero-cross signal is consistent with a set order, switching on and activating the motor if the orders are successively consistent for a number of times.

2. The method of smoothly starting a Hall-less motor according to claim 1, wherein, in the rotor positioning steps, the applied voltage adopts a PWM modulating signal.

3. The method of smoothly starting a Hall-less motor according to claim 1, wherein, in the closed-loop switching steps, the number of times of the comparing step is 2-3 times.
